# EUROPÄISCHE PATENTSCHRIFT

(11) **EP 3 907 439 B1**
(45) Veröffentlichungstag und Bekanntmachung des Hinweises auf die Patenterteilung: **18.10.2023**
(21) Anmeldenummer: 21161752.7
(22) Anmeldetag: 10.03.2021
(51) Int. Cl.: F24F 13/072, F24F 13/24, F24F 11/75, F24F 13/068

(54) **LUFTAUSLASS FÜR VARIABLE LUFTMENGEN MIT KONSTANTER AUSSTRÖMGESCHWINDIGKEIT**
AIR OUTLET FOR VARIABLE AIR VOLUMES WITH CONSTANT DISCHARGE RATE
SORTIE D'AIR POUR QUANTITÉS D'AIR VARIABLES À VITESSE CONSTANTE D'ÉCOULEMENT DE SORTIE

(30) Priorität: 04.05.2020 DE 202020102473 U
(43) Veröffentlichungstag der Anmeldung: 10.11.2021
(73) Patentinhaber: Kiefer Klimatechnik GmbH, 70469 Stuttgart (DE)
(72) Erfinder: Nack, Daniel, 71282 Hemmingen (DE)
(74) Vertreter: SSM Sandmair

(56) Entgegenhaltungen:
- US-A- 2 149 976
- US-A- 2 365 867
- US-A1- 2007 092 374

## Beschreibung

Die vorliegende Erfindung betrifft einen Luftauslass, insbesondere einen Boden-Luftauslass für eine Gebäude-Belüftungsanlage, welcher die Geschwindigkeit der aus dem Luftauslass in einen Gebäuderaum eintretenden Luftströmung konstant hält, und zwar unabhängig vom dem Luftauslass zugeführten Luft-Volumenstrom. Die vorliegende Erfindung betrifft ferner eine Gebäude-Belüftungsanlage mit zumindest einem solchen Luftauslass und ein Verfahren zum Belüften eines Gebäudeteils mit einem solchen Luftauslass.

Bei zum Zwecke der Klimatisierung von Gebäuderäumen eingesetzten Luftauslässen stellt die thermische Behaglichkeit in den zu belüftenden Gebäuderäumen ein entscheidendes Kriterium dar, wobei diese thermische Behaglichkeit entscheidend von der sich nach dem Luftauslass im Raum ausbildenden Luftströmung abhängt. Ferner ist es ein stetes Bestreben, die akustischen Eigenschaften von Belüftungsanlagen zu optimieren, so dass diese weder Strömungsgeräusche in die Gebäuderäume eintragen, noch Geräusche zwischen Gebäuderäumen übertragen.

Bei bisher bekannten Luftauslässen wird die sich im Raum ausbildende Luftströmung über sogenannte Ausblasgitter und gegebenenfalls nachgelagerte, begehbare Bodengitter festgelegt. In diesem Zusammenhang wurde der thermischen Behaglichkeit, insbesondere über unterschiedliche Belüftungsstärken hinweg, bisher nur ungenügend Rechnung getragen. Zur Dämpfung von über die Belüftungsanlage übertragenen oder durch diese hervorgerufenen Schall werden klassischerweise Rohrschalldämpfer eingesetzt, welche den Luftauslässen in der Luftzuführung vorgeschaltet sind.

Es ist die Aufgabe der vorliegenden Erfindung, ein Belüftungsverfahren und einen Luftauslass, insbesondere einen Boden-Luftauslass bereitzustellen, mit welchen über unterschiedliche Belüftungsstärken hinweg die thermische Behaglichkeit in den zu belüftenden Räumen sichergestellt wird.

Diese Aufgabe wird durch den Gegenstand der unabhängigen Ansprüche 1 und 11 gelöst. Die Unteransprüche definieren dabei bevorzugte Ausführungsformen der vorliegenden Erfindung.

Der erfindungsgemäße Luftauslass nach Anspruch 1 umfasst demnach:
- ein Auslassgehäuse mit einer Lufteintrittsöffnung und einer Luftaustrittsöffnung, welches zumindest einen zwischen der Lufteintrittsöffnung und der Luftaustrittsöffnung ausgebildeten Strömungsweg umgrenzt;
- eine erste Drosseleinrichtung, welche dazu ausgestaltet ist, den Querschnitt zumindest eines Abschnitts des Strömungswegs zu variieren;
- eine zweite Drosseleinrichtung, welche dazu ausgestaltet ist, den Querschnitt des Strömungswegs im Bereich der Luftaustrittsöffnung zu variieren; und
- eine Kopplungseinrichtung, welche die erste und die zweite Drosseleinrichtung dergestalt koppelt, dass bei einer Verringerung oder Erhöhung des dem Auslassgehäuse zugeführten Luft-Volumenstroms durch Verringerung bzw. Erhöhung des Querschnitts des zumindest einen Abschnitts des Strömungswegs im Bereich der Luftaustrittsöffnung durch die zweite Drosseleinrichtung so weit verringert bzw. erhöht wird, dass die Strömungsgeschwindigkeit der durch die Luftaustrittsöffnung hindurchtretenden Luft, im Wesentlichen konstant bleibt.

Dabei weist der erfindungsgemäße Luftauslass ein beispielsweise kastenförmiges, hohles Gehäuse auf, welches zur Zuführung von Luft in das Gehäuseinnere wie auch zur Abführung von Luft aus dem Gehäuseinneren jeweils zumindest eine Öffnung aufweist, sodass das Gehäuseinnere von Luft durchströmt werden kann. Die dem Luftauslass zugeführte Luft wird dabei von der Gebäude-Belüftungsanlage über eine Zuleitung geliefert. Die aus dem Luftauslass abgeführte Luft tritt letztendlich in den zu belüftenden Gebäuderaum ein.

Der erfindungsgemäße Luftauslass umfasst ferner zwei Drosseleinrichtungen. Die erste Drosseleinrichtung dient erfindungsgemäß dazu, den dem Auslassgehäuse zugeführten Luft-Volumenstrom auf einen gewünschten Wert einzustellen. Grundsätzlich kann diese erste Drosseleinrichtung an einer beliebigen Stelle im Auslassgehäuse angeordnet sein, um dort den Querschnitt des innerhalb des Auslassgehäuses verlaufenden Strömungsweg je nach Höhe des gewünschten Volumenstroms zu verringern oder auch wieder zu erhöhen. Im Wesentlichen dient die erste Drosseleinrichtung also in erster Linie der Einstellung einer gewünschten Höhe des dem Gebäuderaum zuzuführenden Volumenstroms bzw., bei vorgegebenen Druck in der Luftzuführung, der Einstellung der dem Raum zuzuführenden Luftmassenstrom.

Die Androsselung des dem Auslassgehäuse zugeführten Luftstroms durch die erste Drosseleinrichtung hat jedoch im nachfolgenden Strömungsweg eine Verringerung des Drucks zur Folge, so dass die letztendlich aus dem Luftauslass austretende Luftströmung eine geringere Geschwindigkeit bzw. einen geringeren Impuls aufweist, als eine ungedrosselte Luftströmung. Umgekehrt hat ein Öffnen der ersten Drosseleinrichtung eine Erhöhung der Strömungsgeschwindigkeit bzw. des Strömungsimpulses an der Luftaustrittsöffnung zur Folge. Die An- bzw. Entdrosselung des dem Auslassgehäuse zugeführten Luftstroms hat also direkte Auswirkung auf das sich nach dem Luftauslass im Gebäuderaum ausbildende Strömungsfeld und somit letzten Endes auch auf die thermische Behaglichkeit.

Gemäß der vorliegenden Erfindung weist der Luftauslass demnach eine weitere, der ersten Drosseleinrichtung nachgeschaltete Drosseleinrichtung auf, welche dazu dient, die Strömungsgeschwindigkeit im Bereich der Luftaustrittsöffnung aufrecht zu halten, sobald der Volumenstrom mittels der ersten Drosseleinrichtung erhöht oder verringert wird. Die zu diesem Zwecke im Bereich der Luftauslassöffnung angeordnete Drosseleinrichtung verringert folglich bei abnehmendem Volumenstrom den Querschnitt des Strömungswegs im Bereich der Luftaustrittsöffnung bzw. erhöht diesen Querschnitt bei zunehmendem Volumenstrom. Dank der zweiten Drosseleinrichtung ist es möglich, dass im Bereich der Luftaustrittsöffnung eine konstante Strömungsgeschwindigkeit bzw. ein konstanter Strömungsimpuls vorherrscht, und zwar unabhängig vom aus der Luftaustrittsöffnung austretenden Volumenstrom. Das sich nach der Luftaustrittsöffnung im Gebäuderaum ausbildende Strömungsfeld wird also weitestgehend beibehalten, was letzten Endes der thermischen Behaglichkeit zugutekommt.

Hierfür ist es allerdings notwendig, dass die Betätigung der zweiten Drosseleinrichtung in Abhängigkeit der Betätigung der ersten Drosseleinrichtung erfolgt. Zu diesem Zweck sieht der erfindungsgemäße Luftauslass eine Kopplungseinrichtung vor, welche die Betätigung der ersten und der zweiten Drosseleinrichtung aneinander bindet. Folglich bewirkt eine Betätigung der ersten Drosseleinrichtung auch gleich eine Betätigung der zweiten Drosseleinrichtung, und umgekehrt.

Hierbei ist anzumerken, dass die zweite Drosseleinrichtung darüber hinaus dazu ausgestaltet sein kann, eine gewünschte Strömungsausblasrichtung und/oder eine gewünschte richtungsabhängige Mengenverteilung einzustellen. Beispielsweise kann die zweite Drosseleinrichtung einen Drosselkörper aufweisen, wobei die Ausblasrichtung und/oder die richtungsabhängige Luftmengenverteilung von der Stellung des Drosselkörpers relativ zur Luftaustrittsöffnung abhängt, insbesondere von der räumlichen Orientierung und/oder der räumlichen Positionierung des Drosselkörpers relativ zur Luftaustrittsöffnung.

Gemäß einer Ausführungsform der vorliegenden Erfindung umfasst der Luftauslass ferner zumindest ein im Auslassgehäuse angeordnetes und zur Dämpfung von Schall ausgestaltetes Dämpfungselement. Somit trägt der erfindungsgemäße Luftauslass auch dem Erfordernis Rechnung, mittels der Belüftungsanlage übertragenen oder von dieser verursachten Schall nicht in die zu belüftenden Gebäuderäume einzutragen. Während bisher bekannte Lösungen auf Rohrschalldämpfer zurückgreifen, welche stromaufwärts vor dem Auslassgehäuse in der rohrförmigen Luftzuführung angeordnet werden, will die vorliegende Erfindung die zur Schalldämpfung eingesetzten Komponenten direkt in den Luftauslass bzw. dessen Auslassgehäuse integrieren. Somit fasst die vorliegende Erfindung die technischen Einrichtungen zur Schalldämpfung einerseits und zur Einstellung einer gewünschten Belüftungsstärke andererseits in einer Komponente zusammen, nämlich dem erfindungsgemäßen Luftauslass.

Gemäß einer weiteren Ausführungsform wird das zumindest eine Dämpfungselement von der durch das Auslassgehäuse geführten Luft umströmt. Hierbei kann das zumindest eine Dämpfungselement einen vom Auslassgehäuse umgrenzten Hohlraum in zumindest zwei nebeneinander angeordnete, also getrennt voneinander verlaufende Strömungswege unterteilen.

Grundsätzlich ist es vorstellbar, dass das Auslassgehäuse des erfindungsgemäßen Luftauslasses an seiner Innenseite zumindest teilweise mit einem oder mehreren Dämpfungselementen versehen bzw. ausgekleidet ist, allerdings hat sich gezeigt, dass ein im Wesentlichen zentral innerhalb des hohlen Auslassgehäuses angeordnetes Dämpfungselement sehr gute Resultate erzielt. Im Grunde genommen kann das Dämpfungselement somit im Strömungsweg der das Auslassgehäuse durchströmenden Luft liegen, von dieser also umströmt werden. Ferner ist es vorstellbar, dass das Dämpfungselement dazu dient, mehrere parallel bzw. getrennt verlaufende Strömungswege im Auslassgehäuse auszubilden. Beispielsweise kann das Dämpfungselement an gegenüberliegenden Innenwandungen des Auslassgehäuses zu definieren bzw. anliegen, so dass die das Auslassgehäuse durchströmende Luft in zwei getrennte Ströme aufgeteilt wird. In ähnlicher Weise kann das Dämpfungselement dazu dienen, beliebig viele voneinander getrennte Strömungswege innerhalb des Auslassgehäuses zu definieren bzw. auszubilden. Vor der Luftaustrittsöffnung können die zuvor getrennten Luftströme wieder zusammengeführt werden oder aber das Auslassgehäuse über getrennte Auslassöffnungen verlassen.

Gemäß einer weiteren Ausführungsform der vorliegenden Erfindung ist die erste Drosseleinrichtung dem Dämpfungselement entlang des Strömungswegs vorgeschaltet. Die das Auslassgehäuse erreichende Luftströmung erreicht folglich zunächst die Drosseleinrichtung und, gegebenenfalls mit geringerem Druck, anschließend das zumindest eine Dämpfungselement.

Ferner ist es möglich, dass die erste Drosseleinrichtung in ihrer Öffnungsstellung zumindest teilweise in das Dämpfungselement eingebettet ist und/oder dass zumindest ein Teil des Dämpfungselements die erste Drosseleinrichtung bildet. So kann die erste Drosseleinrichtung ihre Öffnungsstellung erreichen, indem sie in eine für sie vorgesehene Aufnahme im Dämpfungselement einfährt und, um den Strömungsquerschnitt wieder zu verringern, aus dieser Aufnahme in den Strömungsweg einfahren. Gemäß der vorliegenden Erfindung ist es also vorstellbar, die Komponenten für die Einstellung der Belüftungsstärke einerseits und für die Schalldämpfung anderseits nicht nur in einem gemeinsamen Gehäuse unterzubringen, sondern diese sogleich zumindest teilweise in einer integralen Komponente zu vereinigen.

So kann beispielsweise das Dämpfungselement als Gesamtes oder aber auch nur ein Teil davon innerhalb des Auslassgehäuses beweglich ausgestaltet sein. So kann durch eine solche Bewegung der Querschnitt eines oder mehrerer Strömungswege im Auslassgehäuse zumindest abschnittsweise verringert werden, um den dem Auslassgehäuse zugeführten Volumenstrom zu verringern und durch eine entgegengesetzte Bewegung wieder zu erhöhen. In gleicher Weise kann das Dämpfungselement oder auch nur ein Teil davon auf oder gar in die Lufteintrittsöffnung hinein beweglich ausgestaltet sein.

Gemäß einer weiteren Ausführungsform umfasst das Dämpfungselement und insbesondere auch die erste Drosseleinrichtung einen schallabsorbierenden Werkstoff.

Zur Variation des Strömungsquerschnitts weist die erste und die zweite Drosseleinrichtung jeweils einen beweglichen Drosselkörper auf, für den grundsätzlich jede Art von Bewegung denkbar wäre, also eine rotatorische, einen translatorische oder eine daraus kombinierte Schwenkbewegung. Gemäß einer Ausführungsform umfasst die erste und/oder die zweite Drosseleinrichtung jedoch einen zur Variation des Strömungsquerschnitts translatorisch beweglichen Drossel- bzw. Ventilkörper auf.

Insbesondere kann die erste Drosseleinrichtung einen im Wesentlichen parallel zur Strömungsrichtung auf die Lufteintrittsöffnung beweglichen Drosselkörper umfassen. Mittels eines solchen Drosselkörpers wird der freie Querschnitt für die Luftströmung bereits am Anfang des Strömungswegs im Auslassgehäuse variiert. Andererseits kann die Variation des Strömungsquerschnitts mittels des Drosselkörpers auch an einer beliebigen anderen Stelle innerhalb des Auslassgehäuses erfolgen, bevorzugterweise jedoch stromaufwärts vom Dämpfungselement und zwingend vor der zweiten Drosseleinrichtung.

Die zweite Drosseleinrichtung kann einen im Wesentlichen quer zur Strömungsrichtung und innerhalb der Luftaustrittsöffnung beweglichen Drosselkörper umfassen. Die Querschnittsvariation des Strömungswegs zur Aufrechterhaltung der Strömungsgeschwindigkeit erfolgt somit am Ende des durch das Auslassgehäuse verlaufenden Strömungswegs. So ist es vorstellbar, dass der Drosselkörper der zweiten Drosseleinrichtung im Bereich der Luftauslassöffnung quer in den Strömungsweg ein- bzw. ausfahrbar ausgestattet ist, um dort den freien Querschnitt für die Luftströmung zu verringern bzw. zu vergrößern. Auch ist es vorstellbar, dass der Drosselkörper der zweiten Drosseleinrichtung einen oder mehrere Durchlässe aufweist, mittels welcher eine Art variable Blende für die Luftströmung geschaffen wird. Während die erfindungsgemäße Kopplung der ersten mit der zweiten

Drosseleinrichtung ermöglicht, die Ausströmgeschwindigkeit der aus dem Luftauslass strömenden Luft unabhängig von deren Volumenstrom im Wesentlichen konstant zu halten, ermöglicht die Kopplungseinrichtung gemäß einer weiteren Ausführungsform auch das anfängliche Einrichten einer "Grundeinstellung" für das Verhältnis Ausströmgeschwindigkeit/Volumenstrom und/oder für die Ausblasrichtung bzw. die richtungsabhängige Luftmengenverteilung. Hierfür kann die Kopplungseinrichtung das erste und das zweite Drosselelement variabel aneinander koppeln, so dass dieses Verhältnis beliebig an ein gewünschtes Raumklima angepasst werden kann, beispielsweise unmittelbar nach der Installation des Luftauslasses, aber auch zu einem beliebigen späteren Zeitpunkt.

Ferner ist es vorstellbar, dass die Kopplungseinrichtung die erste und die zweite Drosseleinrichtung mechanisch aneinander koppelt, beispielsweise über ein Gestänge, Getriebe oder über beliebig andere in einem mechanischen Wirkzusammenhang stehenden Komponenten. Grundsätzlich ist somit auch eine Kopplung der Drosseleinrichtungen über eine hydraulische Verbindung denkbar. Ebenso vorstellbar wäre eine analoge oder digitale elektromechanische Kopplung, bei welcher die Drosseleinrichtungen jeweils einen Aktuator, beispielsweise einen Elektromotor aufweisen, wobei die Aktuatoren über eine gemeinsame Ansteuerung verfügen und somit in Abhängigkeit voneinander betätigt werden.

Gemäß einer weiteren Ausführungsform der vorliegenden Erfindung weist der Luftauslass eine zur Betätigung der ersten und der zweiten Drosseleinrichtung von außerhalb des Auslassgehäuses ausgestaltete Bedienungseinrichtung auf. Auf diese Weise braucht das Auslassgehäuse des erfindungsgemäßen Luftauslasses nicht mehr geöffnet zu werden, wie dies bei bislang verfügbaren Luftauslässen der Fall ist. Vielmehr kann der aus dem Luftauslass austretende Luftstrom bequem vom Gebäuderaum aus über die Bedienungseinrichtung variiert werden. Hierfür denkbar wären beispielsweise Drehknöpfe, Schieber oder Taster, welche entweder mechanisch oder elektromechanisch auf die Drosseleinrichtungen wirken.

Der erfindungsgemäße Luftauslass kann als linearer oder als runder Luftauslass ausgestaltet sein. Um dessen Installation zu vereinfachen, kann der Luftauslass gemäß einer Ausführungsform eine integrierte Wasserwage und/oder verstellbare Füße aufweisen, wobei diese vorzugsweise über eine dem Gebäuderaum zugewandte Öffnung, insbesondere die Luftaustrittsöffnung ablesbar bzw. zugänglich sein können.

Ferner ist festzuhalten, dass jeder der beiden Drosselkörper, insbesondere der erste Drosselkörper, eine beliebige geometrische Form aufweisen kann, beispielsweise eine runde, eine konische oder eine zylindrische Form. Dies gilt auch für einen Abschnitt des Drosselkörpers.

Ein weiterer Aspekt der vorliegenden Erfindung betrifft eine Gebäude-Belüftungsanlage mit zumindest einem Luftauslass gemäß einer voranstehend beschriebenen Ausführungsform, wobei die Belüftungsanlage ferner eine Regelungseinrichtung aufweist, welche dazu ausgestaltet ist, den Druck in der den zumindest einen Luftauslass vorgeschalteten Luftzuführung konstant zu halten. Somit kann sichergestellt werden, dass der oder die Luftauslässe der Belüftungsanlage mit einer Luftströmung versorgt werden, welche einen vordefinierten Druck aufweist.

Ein weiterer an dieser Stelle offenbarter Aspekt der vorliegenden Erfindung betrifft ein Verfahren zum Belüften eines Gebäudeteils, insbesondere eines Gebäuderaums, mit folgenden Schritten:
- Bereitstellen zumindest eines Luftauslasses nach einer wie voranstehend beschriebenen oder in den Ansprüchen definierten Ausführungsform;
- Festlegen einer Grundstellung der Kopplungseinrichtung entsprechend einer gewünschten, aus der Luftaustrittsöffnung austretenden Luftströmung, insbesondere deren Austrittsgeschwindigkeit bzw. deren Austrittsimpuls; und
- Variation des Volumenstroms der durch die Lufteintrittsöffnung hindurchtretenden Luft mittels der ersten Drosseleinrichtung, wobei die Strömungsgeschwindigkeit der durch die Luftaustrittsöffnung hindurchtretenden Luft mittels der zweiten Drosseleinrichtung im Wesentlichen beibehalten wird.

Ferner ist es möglich, dass das Festlegen der Grundeinstellung zusätzlich entsprechend eines gewünschten, die Lufteintrittsöffnung passierenden Luftvolumenstroms erfolgt.

Eine bevorzugte Ausführungsform der vorliegenden Erfindung wird im Folgenden unter Bezugnahme der beiliegenden Figuren näher erläutert.

Es zeigen:
- Figur 1: einen erfindungsgemäßen Boden-Luftauslass in eingebauter Lage;
- Figur 2: eine Aufsicht auf den erfindungsgemäßen Luftauslass aus der Figur 1.

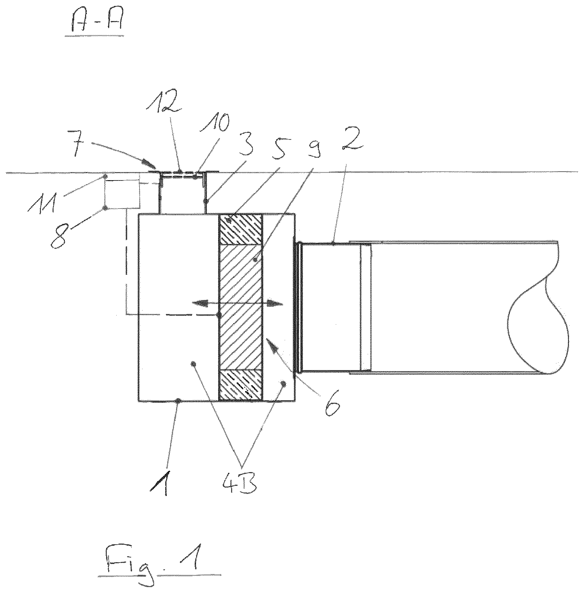

Die Figur 1 zeigt einen Querschnitt durch einen in Einbaulage befindlichen Boden-Luftauslass. Im Wesentlichen wird dieser Luftauslass durch ein Auslassgehäuse 1 gebildet, welches im gezeigten Beispiel als quaderförmiger Kasten ausgestaltet ist. Das Auslassgehäuse 1 weist einen horizontalen Anschlussstutzen mit einer Lufteintrittsöffnung 2 auf, über welche der Luftauslass an eine nicht näher bezeichnete, rohrförmige Luftzuführung einer Gebäude-Belüftungsanlage angeschlossen ist. Der über die Lufteintrittsöffnung 2 in das Auslassgehäuse 1 eintretende Volumenstrom weist einen vordefinierten, mittels einer Regelungseinrichtung der Belüftungsanlage eingeregelten Druck auf. Innerhalb des Auslassgehäuses 1 befindet sich die erste Drosseleinrichtung 6 mit einem zylinderförmigen Drosselkörper 9, der in horizontaler Richtung, dargestellt durch einen Doppelpfeil in der Figur 1, relativ zur Lufteintrittsöffnung 2 verschieblich im Auslassgehäuse 1 gelagert ist. Die Figur 1 zeigt dem Drosselkörper 9 in seiner Öffnungsstellung, in welcher er aus dem Strömungsweg 4 maximal ausgefahren ist. Der durch die Lufteintrittsöffnung 2 hindurchtretende Luftstrom wird im gezeigten Zustand also nicht gedrosselt. Sobald eine Verringerung des von dem Luftauslass gelieferten Volumenstroms gewünscht ist, kann der Drosselkörper 9 translatorisch nach rechts und somit entgegen der Lufteintrittsöffnung 2 verschoben werden, was den für den Luftstrom zur Verfügung stehenden freien Querschnitt des Strömungskanals 4 in diesem Bereich verringert. Falls der Volumenstrom wieder erhöht werden soll, wird der Drosselkörper 9 folglich wieder von der Lufteintrittsöffnung 2 weg in seine Grundstellung verfahren.

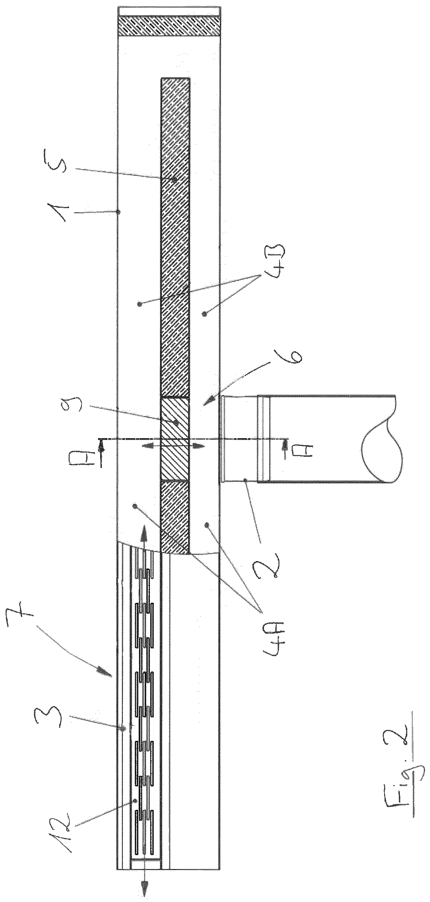

In der gezeigten Ausführungsform umfasst der Drosselkörper 9 einen schallabsorbierenden Werkstoff und bildet somit auch gleich einen Teil des Dämpfungselements 5, welches den Drosselkörper 9 in seiner Grundstellung vollständig aufnimmt und zusammen mit diesem Schall dämpft, welcher den Luftauslass über die Luftzuführung erreicht oder im Bereich des Auslassgehäuses 1 beispielsweise durch die Drosselung des Luftstroms oder das Überströmen von Bauteilkanten verursacht wird. Das Dämpfungselement 5 liegt an den horizontalen Innenwandungen des Auslassgehäuses 1 an und kann vom Luftstrom folglich nur an den Stirnseiten des Auslassgehäuses 1 (siehe Figur 2) passiert werden. Somit wird mittels des Dämpfungselements 5 der Strömungsweg 4 in zwei getrennt voneinander verlaufende Strömungswege 4a, 4b aufgeteilt, welche an der Luftaustrittsöffnung 3 des Auslassgehäuses 1 enden. Die Luftaustrittsöffnung 3 verläuft in vertikaler Richtung und schließt mit der zweiten Drosseleinrichtung 7 ab, welche unter anderem durch einen in horizontaler Richtung verschieblich gelagerten und als mehrfach gelochte Blende ausgestalteten Drosselkörper 10 gebildet wird. Der Drosselkörper 10 liegt plan an einem Auslassgitter 12 an, welches ebenfalls als mehrfach gelochte, begehbare Blende ausgestaltet ist. In der Öffnungsstellung des Drosselkörpers 10 fluchten die Löcher im Drosselkörper 10 und im Auslassgitter 12, so dass der freie Querschnitt für die aus der Luftaustrittsöffnung 3 austretenden Luft einen maximalen Wert annimmt. Zur Verringerung dieses freien Querschnitts wird der Drosselkörper 10 relativ zum Auslassgitter 12 in horizontaler Richtung (siehe den Doppelpfeil in Figur 2) verschoben und die Löcher im Drosselkörper 10 und dem Luftauslassgitter 12 entsprechend aus ihrer Flucht gebracht.

Für die erfindungsgemäße Kopplung der Drosselkörper 9 und 10 weist der gezeigte Luftauslass eine Kopplungseinrichtung 8 auf, welche in der Figur 1 nur schematisch dargestellt ist. Diese Kopplungseinrichtung 8 kann beispielsweise durch ein Getriebe gebildet werden, welches die Bewegungen der Drosselkörper 9 und 10 aneinander koppelt. Ferner weist die Kopplungseinrichtung 8 eine ebenfalls schematisch gezeigte Bedienungseinrichtung 11 auf, mittels welcher ein Benutzer raumseitig, also von oberhalb des Luftauslasses, die Stärke der vom Luftauslass bereitgestellten Belüftung einstellen kann. Für den Fall, dass ein geringerer Luft-Volumenstrom gewünscht ist, wird mittels der Bedienungseinrichtung 11, welche mechanische oder aber auch elektromechanische Stellelemente aufweisen kann, der Drosselkörper 9 entweder direkt oder mittelbar über die Kopplungseinrichtung 8 oder den Drosselkörper 10 dazu veranlasst, nach rechts gegen die Lufteintrittsöffnung 2 zu fahren, bis der gelieferte Volumenstrom den gewünschten Wert annimmt.

Mit der damit einhergehenden Verringerung des Drucks nach dem Drosselkörper 9 nimmt sogleich auch die Austrittsgeschwindigkeit bzw. der Austrittsimpuls der durch die zweite Drosseleinrichtung 7 hindurchtretenden Strömung ab, was die im Raum oberhalb des Luftauslasses wahrgenommene thermische Behaglichkeit beeinflusst. Um dies zu verhindern, sieht die vorliegende Erfindung vor, dass die zweite Drosseleinrichtung 7, an die Betätigung der ersten Drosseleinrichtung 6 gekoppelt, ebenfalls betätigt wird und im vorliegenden Fall den freien Querschnitt im Bereich der Luftaustrittsöffnung 3 verringert. Dies hat zur Folge, dass die Austrittsgeschwindigkeit bzw. der Austrittsimpuls der das Auslassgehäuse verlassenden Luft aufrechterhalten bleibt und es zu keiner Beeinträchtigung der thermischen Behaglichkeit kommt. Sobald der vom Luftauslass gelieferte Volumenstrom wieder erhöht werden soll, wird mittels der Bedienungseinrichtung 11 eine umgekehrte Bewegung der Drosselkörper 9 und 10 veranlasst.

In der Figur 2 ist eine Aufsicht auf den erfindungsgemäßen Luftauslass aus der Figur 1 zu sehen. Die Figur 1 zeigt den Schnitt A-A in der Figur 2.

Wie der Figur 2 entnommen werden kann, wird der Strömungsweg 4 in zwei unabhängige Strömungswege 4A und 4B geteilt. Die durch die Lufteintrittsöffnung 2 hindurchtretende Luft ist somit gezwungen, das Dämpfungselement 5 im Bereich der Stirnseiten des Auslassgehäuses 1 zu umströmen, um das Auslassgehäuse 1 über die Luftaustrittsöffnung 3 wieder zu verlassen. Im Bereich der Stirnseiten des symmetrisch aufgebauten Auslassgehäuses 1 sind weitere, nicht bezeichnete Dämpfungselemente vorgesehen.

Ferner ist der Figur 2 zu entnehmen, dass die Luftaustrittsöffnung 3 als induktiver Luftauslass ausgestaltet ist. Dies wird im gezeigten Beispiel dadurch erreicht, dass das Auslassgitter 12 ebenso wie der Drosselkörper 10 längliche Öffnungen aufweist. Durch unterschiedliche Stellung des Drosselkörpers 10 relativ zum Auslassgitter 12 können mit dem erfindungsgemäßen Luftauslass unterschiedliche Strömungsformen im Raum realisiert werden.

## Patentansprüche

1. Luftauslass, insbesondere Boden-Luftauslass, für eine Gebäude-Belüftungsanlage mit
- einem Auslassgehäuse (1) mit einer Lufteintrittsöffnung (2) und einer Luftaustrittsöffnung (3), welches zumindest einen zwischen der Lufteintrittsöffnung (1) und der Luftaustrittsöffnung (3) ausgebildeten Strömungsweg (4A, 4B) umgrenzt;
- einer ersten Drosseleinrichtung (6), welche dazu ausgestaltet ist, den Querschnitt zumindest eines Abschnitts des Strömungswegs (4) zu variieren, und
- einer zweiten Drosseleinrichtung (7), welche dazu ausgestaltet ist, den Querschnitt des Strömungswegs (4) im Bereich der Luftaustrittsöffnung (3) zu variieren, **gekennzeichnet durch**
- eine Kopplungseinrichtung (8), welche die erste und die zweite Drosseleinrichtung (6, 7) dergestalt koppelt, dass bei einer Verringerung oder Erhöhung des dem Auslassgehäuse (1) zugeführten Luft-Volumenstroms durch Verringerung bzw. Erhöhung des Querschnitts des zumindest einen Abschnitts des Strömungswegs (4) durch die erste Drosseleinrichtung (6) der Querschnitt des Strömungswegs (4) im Bereich der Luftaustrittsöffnung (3) durch die zweite Drosseleinrichtung (7) so weit verringert bzw. erhöht wird, dass die Strömungsgeschwindigkeit der durch die Luftaustrittsöffnung (3) hindurchtretenden Luft im Wesentlichen konstant bleibt.

2. Luftauslass nach Anspruch 1, mit ferner zumindest einem im Auslassgehäuse (1) angeordneten und zur Dämpfung von Schall ausgestalteten Dämpfungselement (5).

3. Luftauslass nach Anspruch 2, wobei das zumindest eine Dämpfungselement (5) von der durch das Auslassgehäuse (1) geführten Luft umströmt wird, und insbesondere einen vom Auslassgehäuse (1) umgrenzten Hohlraum in zumindest zwei nebeneinander angeordnete Strömungswege (4A, 4B) unterteilt.

4. Luftauslass nach einem der Ansprüche 1 bis 3, wobei die erste Drosseleinrichtung (6) dem Dämpfungselement (5) entlang des Strömungswegs (4) vorgeschaltet ist.

5. Luftauslass nach einem der Ansprüche 1 bis 4, wobei die erste Drosseleinrichtung (6) in ihrer Öffnungsstellung zumindest teilweise in das Dämpfungselement (5) eingebettet ist und/oder wobei zumindest ein Teil des Dämpfungselements (5) die erste Drosseleinrichtung (6) bildet.

6. Luftauslass nach einem der Ansprüche 1 bis 5, wobei das Dämpfungselement (5) und insbesondere auch die erste Drosseleinrichtung (6) einen schallabsorbierenden Werkstoff umfasst.

7. Luftauslass nach einem der Ansprüche 1 bis 6, wobei die erste und/oder die zweite Drosseleinrichtung (6, 7) einen zur Variation des Querschnitts des Strömungswegs (4) translatorisch beweglichen Drosselkörper (9, 10) umfasst, insbesondere wobei
- die erste Drosseleinrichtung (6) einen im Wesentlichen parallel zu Strömungsrichtung auf die Lufteintrittsöffnung (2) beweglichen Drosselkörper (9) umfasst, und/oder
- die zweite Drosseleinrichtung (7) einen im Wesentlichen quer zu Strömungsrichtung in der Luftaustrittsöffnung (3) beweglichen Drosselkörper (10) umfasst.

8. Luftauslass nach einem der Ansprüche 1 bis 7, wobei die Kopplungseinrichtung (8) die erste und die zweite Drosseleinrichtung (6, 7) einstellbar koppelt, insbesondere mechanisch oder elektromechanisch koppelt.

9. Luftauslass nach einem der Ansprüche 1 bis 8, mit ferner einer zur Betätigung der ersten und der zweiten Drosseleinrichtung (6, 7) von außerhalb des Auslassgehäuses (1) ausgestalteten Bedienungseinrichtung (11).

10. Luftauslass nach einem der Ansprüche 1 bis 9, mit ferner
- zumindest einer Wasserwaage, welcher die räumliche Orientierung des Auslassgehäuses (1) in seiner Einbauposition anzeigt; und/oder
- zumindest zwei verstellbaren, das Auslassgehäuse (1) in seiner Einbauposition abstützenden Füßen, welche eine Variation der räumlichen Lage und/oder Orientierung des Auslassgehäuses (1) in seiner Einbauposition ermöglichen.

11. Verfahren zum Belüften eines Gebäudeteils, insbesondere eines Gebäuderaums, mit folgenden Schritten:
- Bereitstellen zumindest eines Luftauslasses nach einem der Ansprüche 1 bis 10;
- Festlegen einer Grundstellung der Kopplungseinrichtung entsprechend einer gewünschten, aus der Luftaustrittsöffnung austretenden Luftströmung, insbesondere deren Austrittsgeschwindigkeit bzw. deren Austrittsimpuls; und
- Variation des Volumenstroms der durch die Lufteintrittsöffnung hindurchtretenden Luft mittels der ersten Drosseleinrichtung, wobei die Strömungsgeschwindigkeit der durch die Luftaustrittsöffnung hindurchtretenden Luft mittels der zweiten Drosseleinrichtung im Wesentlichen beibehalten wird.

12. Verfahren zum Belüften eines Gebäudeteils nach Anspruch 11, wobei das Festlegen der Grundeinstellung zusätzlich entsprechend eines gewünschten, die Lufteintrittsöffnung passierenden Luftvolumenstroms erfolgt.

## Claims

1. Air outlet, in particular floor air outlet, for a building air-conditioning unit, having
- an outlet housing (1) having an air entry opening (2) and an air exit opening (3) that delimits at least one flow path (4A, 4B) formed between the air entry opening (1) and the air exit opening (3);
- a first restrictor device (6) that is designed to vary the cross-section of at least one portion of the flow path (4), and
- a second restrictor device (7) that is designed to vary the cross-section of the flow path (4) in the region of the air exit opening (3), **characterised by**
- a coupling device (8) that couples the first and the second restrictor device (6, 7) in such a manner that when the volume flow rate of the air added to the outlet housing (1) is reduced or increased by reducing or increasing the cross-section of the at least one portion of the flow path (4) via the first restrictor device (6), the cross-section of the flow path (4) in the region of the air exit opening (3) is reduced or increased via the second restrictor device (7) to such an extent that the flow velocity of the air flowing through the air exit opening (3) remains substantially constant.

2. Air outlet according to claim 1, further having at least one damping element (5) arranged in the outlet housing (1) and designed to damp sound.

3. Air outlet according to claim 2, wherein the at least one damping element (5) is flowed around by the air guided through the outlet housing (1), and in particular subdivides a chamber delimited by the outlet housing (1) into at least two flow paths (4A, 4B) arranged next to each other.

4. Air outlet according to one of claims 1 to 3, wherein the first restrictor device (6) is upstream of the damping element (5) along the flow path (4).

5. Air outlet according to one of claims 1 to 4, wherein in its open position, the first restrictor device (6) is at least partially embedded in the damping element (5) and/or wherein at least a part of the damping element (5) forms the first restrictor device (6).

6. Air outlet according to one of claims 1 to 5, wherein the damping element (5), and in particular the first restrictor device (6) as well, comprises a sound-absorbing material.

7. Air outlet according to one of claims 1 to 6, wherein the first and/or the second restrictor device (6, 7) comprises a restrictor body (9, 10) that can be moved translationally to vary the cross-section of the flow path (4), in particular wherein
- the first restrictor device (6) comprises a restrictor body (9) that can be moved substantially in parallel with the flow direction onto the air entry opening (2), and/or
- the second restrictor device (7) comprises a restrictor body (10) that can be moved substantially transversely to the flow direction in the air exit opening (3).

8. Air outlet according to one of claims 1 to 7, wherein the coupling device (8) adjustably couples the first and the second restrictor device (6, 7), in particular couples them mechanically or electromechanically.

9. Air outlet according to one of claims 1 to 8, further having an operating device (11) for operating the first and the second restrictor device (6, 7) from outside of the outlet housing (1).

10. Air outlet according to one of claims 1 to 9, further having
- at least one spirit level that shows the spatial orientation of the outlet housing (1) in its installation position; and/or
- at least two adjustable feet supporting the outlet housing (1) in its installation position, which enable a variation of the spatial position and/or orientation of the outlet housing (1) in its installation position.

11. Method for ventilating a part of a building, in particular a room in a building, having the following steps:
- providing at least one air outlet according to one of claims 1 to 10;
- determining a basic position of the coupling device corresponding to a desired air flow exiting the air exit opening, in particular the exit velocity or exit momentum of said air flow; and
- varying the volume flow of the air flowing through the air entry opening by means of the first restrictor device, wherein the flow velocity of the air flowing through the air exit opening is substantially maintained by means of the second restrictor device.

12. Method for ventilating a part of a building according to claim 11, wherein the basic setting is additionally determined corresponding to a desired air volume flow passing the air entry opening.

## Revendications

1. Sortie d'air, notamment sortie d'air au sol, pour une installation de ventilation de bâtiment, pourvue
- d'un boitier de sortie (1) avec un orifice d'entrée d'air (2) et un orifice de sortie d'air (3), lequel délimite au moins un chemin d'écoulement (4A, 4B) formé entre l'orifice d'entrée d'air (1) et l'orifice de sortie d'air (3) ;
- un premier dispositif d'accélération (6) qui est conçu pour faire varier la section transversale d'au moins un segment du chemin d'écoulement (4),
- un deuxième dispositif d'accélération (7), lequel est conçu pour faire varier la section transversale du chemin d'écoulement (4) dans la zone de l'orifice de sortie d'air (3), **caractérisée par**
- un dispositif de couplage (8), lequel accouple le premier et le deuxième dispositif d'accélération (6, 7) de telle manière que, pour une diminution ou une augmentation du débit d'air alimenté vers le boitier de sortie (1), respectivement, une augmentation de la section transversale de l'au moins un segment du chemin d'écoulement (4) par le premier dispositif d'accélération (6), la section transversale du chemin d'écoulement (4) est diminuée, respectivement augmentée, d'une ampleur telle dans la zone de l'orifice de sortie d'air (3), par le deuxième dispositif d'accélération (7), que la vitesse d'écoulement de l'air traversant l'orifice de sortie d'air (3) reste essentiellement constante.

2. Sortie d'air selon la revendication 1, pourvue en outre d'au moins un élément d'amortissement (5) disposé dans le boitier de sortie (1) et conçu pour l'amortissement de bruit.

3. Sortie d'air selon la revendication 2, dans laquelle l'au moins un élément d'amortissement (5) est entouré par l'écoulement de l'air mené à travers le boitier de sortie (1) et, en particulier, subdivise un espace creux délimitant le boitier de sortie (1) en au moins deux chemins d'écoulement (4A, 4B) disposés l'un à côté de l'autre.

4. Sortie d'air selon l'une des revendications 1 à 3, dans laquelle le premier dispositif d'accélération (6) est raccordé avant l'élément d'amortissement (5) le long du chemin d'écoulement (4).

5. Sortie d'air selon l'une des revendications 1 à 4, dans laquelle le premier dispositif d'accélération (6) est incorporé au moins partiellement dans l'élément d'amortissement (5) dans sa position d'ouverture et/ou dans laquelle au moins une partie de l'élément d'amortissement (5) forme le premier dispositif d'accélération (6).

6. Sortie d'air selon l'une des revendications 1 à 5, dans laquelle l'élément d'amortissement (5) et, en particulier, également le premier dispositif d'accélération (6), comprend un matériau absorbant le bruit.

7. Sortie d'air selon l'une des revendications 1 à 6, dans laquelle le premier et/ou le deuxième dispositif d'accélération (6, 7) comprend un corps d'accélération (9, 10) mobile par translation pour la variation de la section transversale du chemin d'écoulement (4), en particulier dans laquelle
- le premier dispositif d'accélération (6) comprend un corps d'accélération (9) mobile essentiellement de manière parallèle par rapport à la direction d'écoulement sur l'orifice d'entrée d'air (2), et/ou
- le deuxième dispositif d'accélération (7) comprend un corps d'accélération (10) mobile essentiellement de manière perpendiculaire par rapport à la direction d'écoulement dans l'orifice de sortie d'air (3).

8. Sortie d'air selon l'une des revendications 1 à 7, dans laquelle le dispositif de couplage (8) accouple de manière réglable, en particulier, accouple en particulier mécaniquement ou électro-mécaniquement, le premier et le deuxième dispositif d'accélération (6, 7).

9. Sortie d'air selon l'une des revendications 1 à 8, pourvue en outre d'un dispositif d'actionnement (11) conçu pour l'actionnement du premier et du deuxième dispositif d'accélération (6, 7) à partir de l'extérieur du boitier de sortie (1).

10. Sortie d'air selon l'une des revendications 1 à 9, pourvue en outre
- d'au moins un niveau à bulle, lequel indique l'orientation spatiale du boitier de sortie (1) dans sa position de montage ; et/ou
- d'au moins deux pieds réglables, soutenant le boitier de sortie (1) dans sa position de montage, lesquels permettent une variation de la position et/ou de l'orientation spatiale du boitier de sortie (1) dans sa position de montage.

11. Procédé de ventilation d'une pièce de bâtiment, notamment d'un espace de bâtiment, avec les étapes suivantes :
- la mise en place d'au moins une sortie d'air selon l'une des revendications 1 à 10 ;
- le réglage d'une position de base du dispositif de couplage de manière correspondante à un écoulement d'air sortant de l'orifice de sortie d'air, en particulier, de sa vitesse de sortie, respectivement, de son impulsion de sortie, et
- la variation du débit de l'air traversant l'orifice d'entrée d'air au moyen du premier dispositif d'accélération, où la vitesse d'écoulement de l'air traversant l'orifice de sortie d'air est maintenue essentiellement au moyen du deuxième dispositif d'accélération.

12. Procédé de ventilation d'une pièce de bâtiment selon la revendication 11, dans lequel le réglage de la position de base a lieu en plus de manière correspondante à un débit d'air souhaité, adapté à l'orifice d'entrée d'air.
